# EUROPEAN PATENT APPLICATION

(11) **EP 4 790 759 A1**
(43) Date of publication of application: **12.08.2026**
(21) Application number: 26156101.3
(22) Date of filing: 03.02.2026
(51) Int. Cl.: H01M 4/136, H01M 4/36, H01M 4/58

(54) **LITHIUM MANGANESE IRON PHOSPHATE (LMFP) BATTERY SYSTEM FOR HEAVY DUTY APPLICATIONS**

(30) Priority: 07.02.2025 US 202563755871 P
(71) Applicant: Cummins, Inc., Columbus, Indiana 47201 (US)
(72) Inventor: Zhang, Ruigang, Columbus, 47201 (US); Chen, Jie, Columbus, 47201 (US)
(74) Representative: Cleveland Scott York

(57) **Abstract**

Disclosed are lithium manganese iron phosphate (LMFP) battery systems, cells, and methods configured to smooth stair-like voltage behavior inherent to LMFP chemistries. The disclosure describes blending LMFP cathode materials having different iron-to-manganese ratios to moderate multiphase redox reactions and produce a more slope-like voltage profile during charge and discharge. The blended cathode materials may be integrated at a material level, electrode level, cell level, or pack level to improve state-of-charge estimation, power control, and battery management system performance while preserving the inherent safety, cost, and cycle-life advantages of LMFP chemistry. The disclosed systems support modular battery architectures and are adaptable to electric vehicles, heavy-duty applications, and stationary energy storage. By reducing steep voltage transitions without introducing higher-risk chemistries, the disclosed approaches enable improved controllability, reliability, and scalability of LMFP-based energy storage systems.

## Description

### Cross-Reference to Related Applications

This application claims the benefit of U.S. Provisional Application No. 63/755,871, titled "Lithium Manganese Iron Phosphate (LMFP) Battery System for Heavy Duty Applications," filed February 7, 2025, the entire contents of which are hereby incorporated by reference in their entirety.

### Technical Field

This invention relates to energy storage systems for electric vehicles (EVs). Specifically, it pertains to the design, composition, and integration of Lithium Manganese Iron Phosphate (LMFP) batteries for enhanced performance, safety, and sustainability in EV applications.

### Background

The adoption of EVs has significantly increased, driven by the need for sustainable transportation. Lithium-ion batteries (LIBs) dominate the EV market due to their high energy density and efficiency. However, existing LIB chemistries, such as Lithium Nickel Manganese Cobalt Oxide (NMC) and Lithium Iron Phosphate (LFP), face challenges in balancing cost, thermal stability, energy density, and sustainability.

LMFP batteries offer a promising solution by combining the inherent thermal stability of LFP with the enhanced energy density imparted by manganese doping. Despite these advantages, integration into EV systems has been limited by challenges in optimizing material synthesis, electrode design, and vehicle-level management systems.

### Summary

This disclosure provides a novel LMFP battery system tailored for EVs. It addresses key challenges through advancements in cathode material composition, cell architecture, thermal management, and battery management systems (BMS). The system provides a range of notable advantages, including improved energy density through the optimized synthesis of LMFP cathode materials, making it competitive with NMC chemistries. It offers extended cycle life and enhanced calendar stability, achieved through advanced doping techniques and precise electrode formulations. Superior thermal properties ensure exceptional stability, significantly reducing the risk of thermal runaway and enhancing overall safety. Cost-effectiveness is another key benefit, as the system minimizes reliance on expensive materials such as cobalt and nickel, promoting sustainability and reducing production expenses. Additionally, its modular design allows seamless scalability, enabling integration into a variety of electric vehicle platforms.

Principles of the present disclosure apply blended LMFP to smooth steep voltage of discharge of LMFP batteries. This approach still maintains the merits of LMFP chemistry, such as low cost, high safety performance and long cycle life.

### Drawings

FIG. 1 is a diagram showing various discharge curves of LMFP cells having different Mn:Fe ratios;
FIG. 2 is a diagram showing several scenarios under which the principles of the present disclosure are employable; and
FIG. 3 is a flowchart of a method according to principles of the present disclosure where FIG. 3 includes a first section of the flowchart shown in FIG. 3A and the second section of the flowchart shown in FIG. 3B.
FIG. 4 is a schematic diagram illustrating an example electrified vehicle system incorporating a battery pack constructed according to the principles of the present disclosure.

### Detailed Description:

LMFP battery devices, systems, and methods disclosed herein leverage advanced materials and manufacturing techniques to optimize performance and reliability. At its core, the cathode and anode form the essential components of the battery. The cathode is the positive electrode and serves as the source of lithium ions during discharge. It is designed to host manganese, iron, and phosphate in a uniform distribution to maximize capacity and cycle life. Nanostructuring the cathode increases its surface area, facilitating faster ion transport and reduced charge transfer resistance, which makes it suitable for high-rate applications. The cathode material is synthesized through a co-precipitation method, ensuring a consistent composition that enhances stability and longevity.

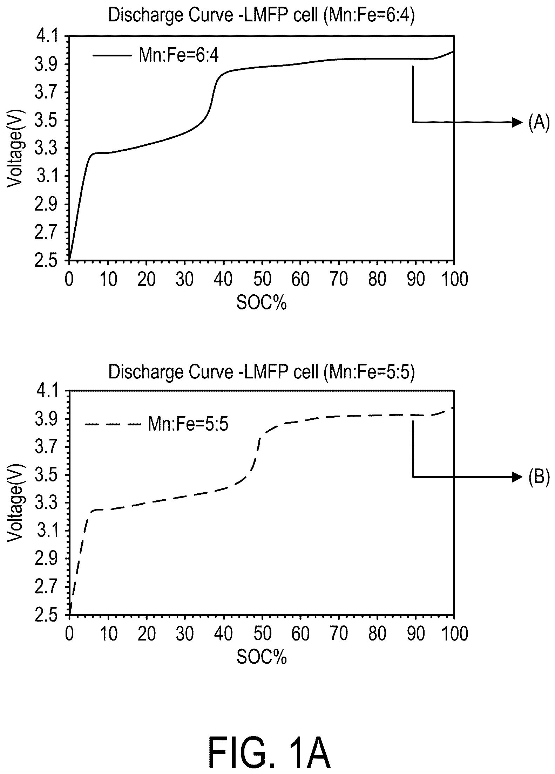

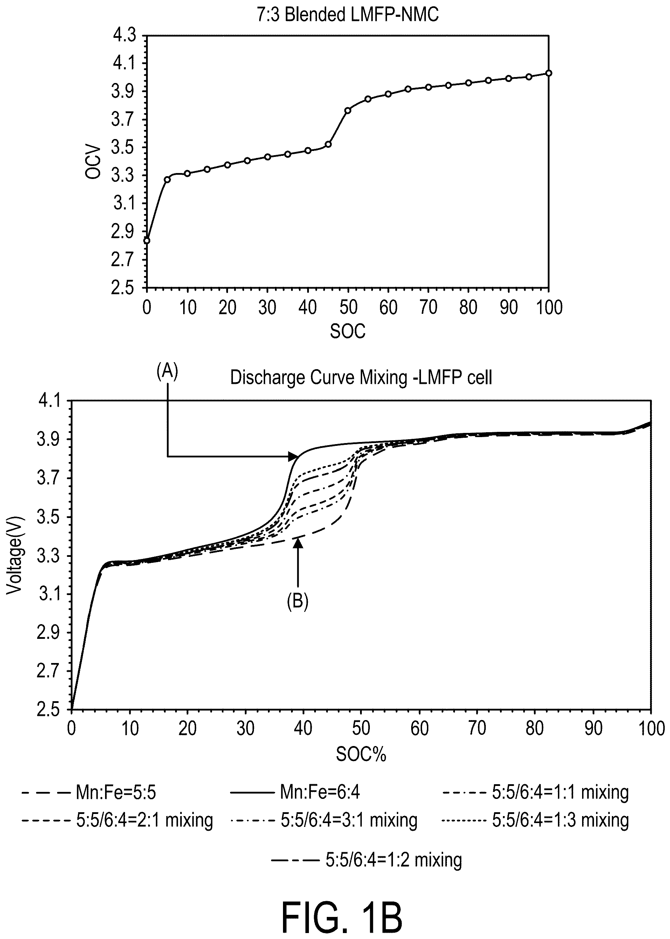

The anode, on the other hand, is the negative electrode of the battery and acts as the recipient of lithium ions during discharge. Principles of this disclosure are applicable for a lithium ion battery with different anode materials such as graphite, silicon, lithium metal, etc. (For example, the results in FIG. 1 were collected with graphite as the anode.) This composition enables the battery to achieve a balance between energy density and cycle life. The electrolyte in the system, infused with stabilizing additives, forms a solid electrolyte interphase (SEI) on the anode to protect it from degradation and to improve thermal properties.

The cathode material undergoes high-temperature solid-state reactions for synthesis, where precursors are calcined in controlled environments to achieve the desired crystalline structure. The particles are coated with conductive carbon to improve electron transport and durability. Additionally, doping with elements such as magnesium or zirconium enhances the structural integrity of the material, enabling it to withstand repeated charge and discharge cycles without significant degradation.

Electrode fabrication integrates these materials into a cohesive system. The active material is mixed with conductive additives and binders to form a slurry, which is uniformly applied to a current collector. This ensures consistent thickness and minimal defects. After drying and calendaring, the electrodes are assembled into cells that can be cylindrical, prismatic, or pouch-shaped, depending on the application requirements.

Thermal management in the battery system is vital to maintaining operational safety and efficiency. The thermal management system (TMS) incorporates phase change materials to absorb excess heat during high-demand scenarios, and a liquid cooling system ensures even heat distribution throughout the battery pack. Embedded thermal sensors provide real-time data to the battery management system (BMS), which dynamically adjusts operations to optimize thermal performance.

The BMS is a sophisticated control system that monitors and manages the battery's state of charge (SOC) and state of health (SOH). Using advanced algorithms, the BMS can predict performance trends and detect potential issues, ensuring the battery remains within safe operating conditions. Active cell balancing within the BMS extends the overall lifespan of the system by equalizing the charge across all cells, preventing overcharging and undercharging.

To ensure compatibility with various electric vehicle platforms, the battery pack is modular in design. Each module is self-contained with its own control systems, allowing scalability to meet different energy and power requirements. This modular approach simplifies maintenance and recycling, enhancing the sustainability of the overall system.

The electrolyte formulation is a crucial aspect of the battery's performance. High-voltage electrolytes, augmented with advanced additives, stabilize the cathode interface and prevent decomposition at elevated voltages. This extends the battery's operational range and improves energy density without compromising safety. The separator, chosen for its thermal stability and low resistance, enhances safety by preventing internal short circuits while promoting efficient ion transport.

Integrating LMFP batteries into electric vehicles requires standardizing interfaces and ensuring compatibility with existing charging infrastructure. The battery supports fast-charging capabilities, reducing downtime for vehicle owners. Furthermore, the system's inherent resistance to thermal runaway, due to its stable crystal structure and high decomposition temperature, provides an additional layer of safety.

Rigorous quality control during manufacturing ensures high reliability. Each cell undergoes comprehensive testing for capacity, impedance, and thermal stability. Automated inspection systems identify and address potential defects, ensuring consistent performance across all manufactured units.

Sustainability is a cornerstone of the LMFP battery system. By minimizing the use of cobalt and nickel, the environmental and ethical concerns associated with their extraction are reduced. The relatively straightforward composition of the LMFP material facilitates recycling, enabling efficient recovery of key components such as lithium, manganese, and iron.

The LMFP battery system represents a transformative advancement in energy storage technology for electric vehicles. By addressing the limitations of existing lithium-ion batteries, it offers a pathway to safer, more efficient, and sustainable transportation solutions. Each component, from the cathode and anode to the electrolyte and thermal management system, has been meticulously engineered to meet the demanding requirements of modern electric vehicles, setting a new benchmark in performance and reliability.

LMFP battery chemistry is desirable for next-generation solutions, owing to its exceptional attributes such as cost-effectiveness, robust safety profile, and outstanding long-life performance. These qualities make LMFP a promising candidate for addressing the growing demands of advanced energy storage systems.

The present disclosure relates to smoothing a stair-like voltage in LMFP technology with a blended cathode material. More particularly, the present disclosure relates to smooth steep voltage transitions of LMFP batteries through blending different LMFP cathode materials with various ratios. Voltage transitions in LMFP batteries are a defining characteristic that enhances their operational stability and efficiency. During charge and discharge cycles, the lithium ions transition between the anode and cathode through a series of voltage plateaus, which are governed by the redox reactions of manganese and iron within the cathode material. These transitions occur at distinct voltage levels due to the multi-electron processes involved, offering a stable energy delivery profile. The presence of manganese increases the operational voltage range, while iron ensures cost-effectiveness and structural durability. This balance allows LMFP batteries to achieve higher energy densities without compromising cycle life. Additionally, the stable voltage transitions reduce the stress on the electrolyte, minimizing degradation and extending the battery's lifespan.

However, the stair-step nature of the voltage profile presents a significant challenge in practical applications. This distinct voltage behavior complicates the precise monitoring of the SOC and the accurate control of power output. For battery engineers, a smoother, slope-like voltage curve is highly desirable, as it facilitates more efficient BMS development, enabling improved operational control and reliability.

To address this issue, the concept of blending LMFP with Nickel Manganese Cobalt (NMC) has been proposed to smooth out the sharp voltage transitions. Despite these efforts, the characteristic stair-like voltage profile remains evident. Moreover, incorporating NMC into the blend introduces additional trade-offs, including reduced safety performance, a shorter cycle life, and increased production costs. These challenges highlight the need for further innovation and optimization to fully harness the potential of LMFP batteries while mitigating these limitations.

FIG. 1 is a diagram showing several discharge curves for an LMFP cell for different chemistries, including Mn-Fe ratios of 5:5, 6:4, 7:3 and mixed variations of these materials, such as mixing at 1:1, 1:2, 2:1, 3:1, and 1:3. Although the discharge curves of 6:4 and 5:5 are shown, LMFP cells with Mn-Fe ratio of 7:3 and 6:4 are contemplated and are candidates for evaluation. The voltage curves of blended LMFP cathode are based on the simulation of the voltage of single phase LMFP and for illustration purposes only.

In this light, the present disclosure relates to using blended LMFP with different Mn-Fe ratio to smooth the voltage curve. This will counteract a problem of the two-phase voltage profile with steep transition, which brings challenges in SOC estimation and power control associated with this technology. The blended LMFP includes at least two materials with different Mn-Fe ratios. For instance, these materials can be selected from a group consisting of Mn-Fe ratios of 5:5, 6:4, 7:3, or other similar ratios. By tuning the ratio of different LMFP cathode materials with different Mn-Fe ratios, the LMFP voltage curve can be significantly smoothed, which will benefit the battery control in real application. Advantageously, the blended LMFP will still maintain the advantages of LMFP cathode material, such as low cost, high safety and long cycle life.

The voltage curves of blended LMFP cathode are based on the simulation of the voltage of single phase LMFP and just for illustration purposes. Real voltage profile is expected to be more slope-like. It is contemplated that blending triple, quadruple or even more LMFP phases will further smooth the voltage profile and benefit the battery control.

LMFP batteries are particularly useful in heavy-duty applications due to their excellent thermal stability, long cycle life, and high energy density. These characteristics make them well-suited for demanding environments such as commercial vehicles, industrial machinery, and grid-scale energy storage systems. LMFP batteries can handle high discharge rates and maintain performance under heavy loads, ensuring reliable power delivery for extended periods. Additionally, their inherent safety features, such as resistance to thermal runaway, provide an extra layer of protection in rugged and high-stress operational conditions, making them a dependable choice for heavy-duty use cases.

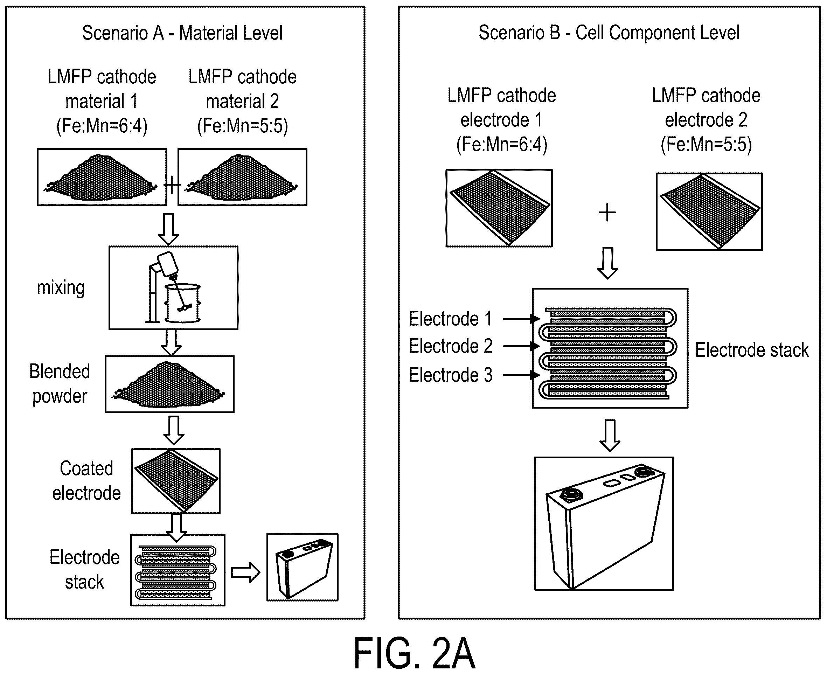

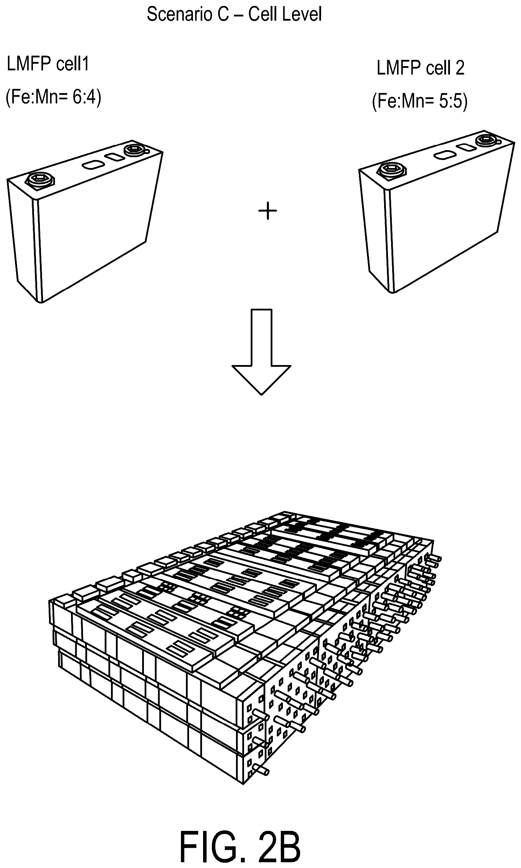

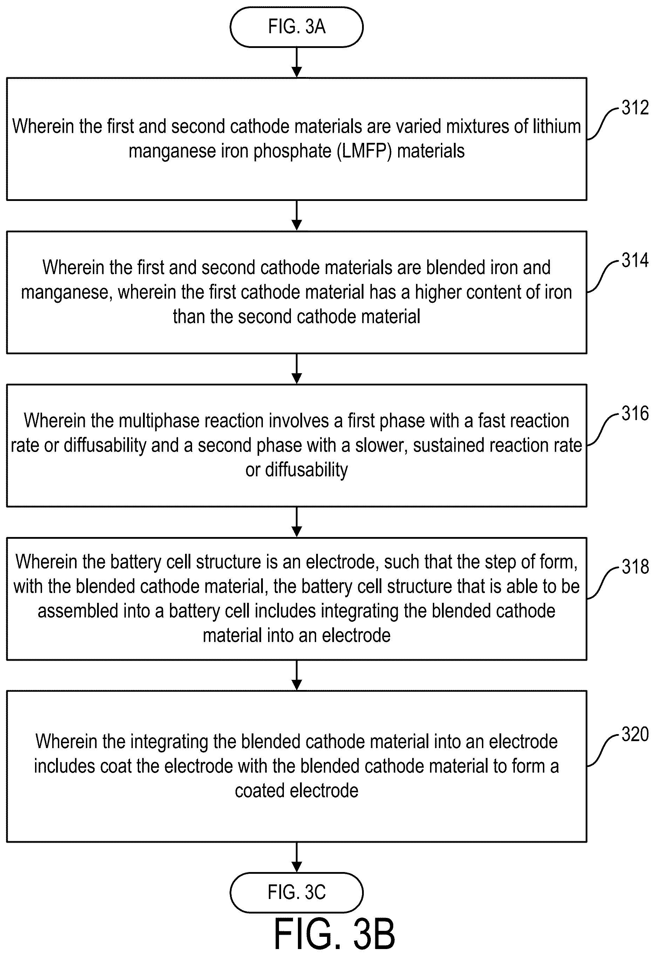

FIGS. 2A and 3B show various scenarios under which principles of the present disclosure may be carried out. In particular, FIG. 2A shows Scenarios A and B, which correspond to a material level and cell component level respectively. And FIG. 2B shows Scenario C, which corresponds to a cell level. Each of these Scenarios is discussed in more detail hereinafter. Note that although these figures illustrate first and second cathode materials having Fe-Mn ratios of 6:4 and 5:5 respectively, it is contemplated that these Scenarios can be employed using any of the Fe-Mn ratios discussed elsewhere herein.

### Scenario A -Material Level

The process of forming a material for a battery involves several useful steps, each contributing to the overall performance, durability, and safety of the final battery cell. The illustrated materials are as follows: LMFP cathode material 1 (Fe:Mn= 6:4) and LMFP cathode material 2 (Fe:Mn= 5:5). For example, the cathode material 6:4 and 7:3 can be used and verified in a lab. The steps include mixing the materials to form a blended material, coating an electrode with the blended material, forming an electrode stack with the electrode, and integrating the electrode stack into a battery cell.

The initial step involves mixing the active materials, such as cathode or anode components, with conductive additives and binders to create a uniform blended powder. This step ensures homogeneity in the distribution of materials, which is essential for consistent electrochemical performance. High-precision equipment, such as ball mills or high-shear mixers, is often employed to achieve the desired particle size and distribution. The blended powder is then subjected to performance assessments to verify its composition and verify it meets predefined specifications.

In the next step, the blended powder is processed into a slurry by adding a suitable solvent. The slurry is then applied to a current collector, typically aluminum for the cathode or copper for the anode, using techniques such as doctor blade coating or slot-die coating. The coated electrode is subsequently dried to remove the solvent and then calendared to achieve the desired thickness and density. This step is useful for ensuring good contact between the active materials and the current collector, which enhances electron transfer and overall efficiency.

The coated electrodes are then cut into specific shapes and layered to form an electrode stack. Depending on the design of the battery, this can involve stacking individual layers of anode, separator, and cathode in a specific sequence or winding them into a cylindrical or prismatic configuration. The separator plays a vital role in preventing short circuits by electrically isolating the anode and cathode while allowing ionic movement between them. Precision in alignment and stacking is useful to verify uniform electrochemical reactions during operation.

Finally, the electrode stack is enclosed within a cell casing, which can be cylindrical, prismatic, or pouch-shaped. Electrolyte is introduced into the cell to facilitate ionic conductivity, and the cell is sealed using techniques such as heat sealing, crimping, or laser welding. The formed cell undergoes an initial charging process, often referred to as formation cycling, to activate the electrochemical materials and stabilize the solid electrolyte interphase (SEI) layer. Once formed, the cell is subjected to comprehensive evaluation to ensure it meets performance, safety, and quality standards before integration into larger battery packs.

These steps collectively ensure the production of high-performance battery cells with the desired energy density, cycle life, and safety characteristics.

### Scenario B - Cell Component Level

The process of mixing at the cell component level for battery manufacturing focuses on precise assembly techniques that ensure optimal performance and safety of the final product. Key steps include forming an electrode stack and constructing the complete battery cell. The illustrated materials and components are as follows: LMFP cathode material 1 (Fe:Mn= 6:4) and LMFP cathode material 2 (Fe:Mn= 5:5) where the cell component is an electrode. For example, verification tests can be performed with 6:4 and 7:3. The steps include forming an electrode stack with two or more cathode electrode and integrating the electrode stack into a battery cell.

The method of constructing a battery cell begins with the selection and preparation of two distinct cathode electrodes, each featuring a different chemistry to optimize performance across various operating conditions. These cathode electrodes are engineered to complement each other, leveraging the advantages of multiple active materials to enhance energy density, cycle life, and overall stability.

Each cathode electrode is fabricated using an independent composition of active materials, chosen to support different electrochemical characteristics. The first cathode electrode may comprise a high-energy-density material such as lithium nickel manganese cobalt oxide (NMC) to provide strong voltage stability and prolonged discharge capacity. The second cathode electrode can be composed of lithium manganese iron phosphate (LMFP), known for its superior thermal stability and long cycle life.

The cathode electrodes are coated onto aluminum current collectors, ensuring uniform material distribution. The electrodes are then calendared to achieve precise thickness and density for optimal ion transport and structural integrity.

The prepared cathode electrodes are incorporated into an electrode stack alongside corresponding anode electrodes, which are typically composed of graphite, silicon-carbon composites, or other high-capacity materials. A separator is placed between each cathode and anode layer to prevent electrical short circuits while allowing for efficient ionic movement during charge and discharge cycles.

The electrode stack is assembled in a repeating sequence to ensure consistent electrochemical interactions. The stacking process can be achieved through automated precision layering techniques, ensuring accurate alignment of all components. The structured electrode stack is then subjected to compression to enhance contact between layers, improving conductivity and mechanical stability.

Once the electrode stack is formed, it is integrated into a battery housing designed for optimal safety and performance. The housing can be cylindrical, prismatic, or pouch-style, depending on the intended application. Electrolyte is then introduced into the cell, carefully chosen to support both cathode chemistries and facilitate stable ion transport.

The cell is sealed using heat or laser welding techniques to prevent contamination and ensure long-term reliability. A formation process is then applied, which includes controlled charge and discharge cycles to activate the electrochemical reactions, stabilize the solid electrolyte interphase (SEI) layer, and ensure the proper interaction between the dual-chemistry cathodes.

Finally, the battery cell undergoes rigorous testing for capacity retention, thermal stability, and cycling efficiency before being prepared for integration into battery modules and packs for commercial applications. This method allows for a balanced approach to energy storage, leveraging the strengths of multiple cathode chemistries to create a high-performance lithium-ion battery cell.

### Scenario C - Cell Level

The process of mixing at the cell level involves assembling individual battery cells into a cohesive battery pack that meets specific energy and power requirements. This stage focuses on integrating the cells while ensuring optimal performance, safety, and compatibility with the intended application. The illustrated materials are as follows: LMFP cathode material 1 (Fe:Mn= 6:4) and LMFP cathode material 2 (Fe:Mn= 5:5). The steps include integrating both a battery cell with a first cathode material and a battery cell with a second cathode material into a battery pack.

**Forming a Battery Pack from the Cells:** Battery pack formation begins by arranging the individual cells in a specific configuration, such as series, parallel, or a combination of both, depending on the desired voltage and capacity requirements. Cells are connected using conductive interconnects, such as busbars or welded tabs, to create an electrical pathway that enables efficient energy transfer across the pack. The arrangement is carefully designed to minimize resistance and ensure balanced performance among all cells.

To maintain mechanical stability and thermal management, the cells are housed within a robust enclosure. The enclosure is often constructed from materials such as aluminum or high-strength polymers to provide durability while minimizing weight. Thermal management systems, such as liquid cooling plates or heat sinks, are integrated into the pack to regulate temperatures during operation and prevent overheating.

The BMS is installed as a component of the battery pack. The BMS monitors the SOC, SOH, and temperature of each cell to ensure balanced operation and prevent overcharging or deep discharging. Advanced algorithms within the BMS enable dynamic adjustments to optimize the performance and lifespan of the battery pack.

The final step involves sealing the battery pack to protect it from external environmental factors, such as moisture, dust, and mechanical shocks. The assembled pack undergoes a series of rigorous tests, including electrical performance assessments, thermal evaluations, and safety verifications, to ensure it meets all quality and regulatory standards. Once approved, the battery pack is ready for integration into electric vehicles, energy storage systems, or other applications, delivering reliable and efficient power for a wide range of uses.

By following these steps, manufacturers can produce battery packs that are highly efficient, durable, and tailored to meet the demands of modern energy applications.

While these steps have been discussed in the context of LMFP batteries, similar approaches can be applied to other battery chemistries. For instance, lithium nickel manganese cobalt oxide (NMC) or lithium iron phosphate (LFP) batteries can benefit from the same principles of precise cell arrangement, robust thermal management, and advanced battery management systems. Regardless of the chemistry, the foundational processes of ensuring uniformity in cell performance, protecting the pack from environmental stressors, and integrating effective monitoring and control systems remain universal.

These methodologies not only enhance the performance and safety of the battery pack but also offer flexibility in adapting to the unique properties and challenges of different chemistries. By leveraging these shared techniques, manufacturers can develop customized solutions that meet the specific requirements of various applications, from electric vehicles to renewable energy storage.

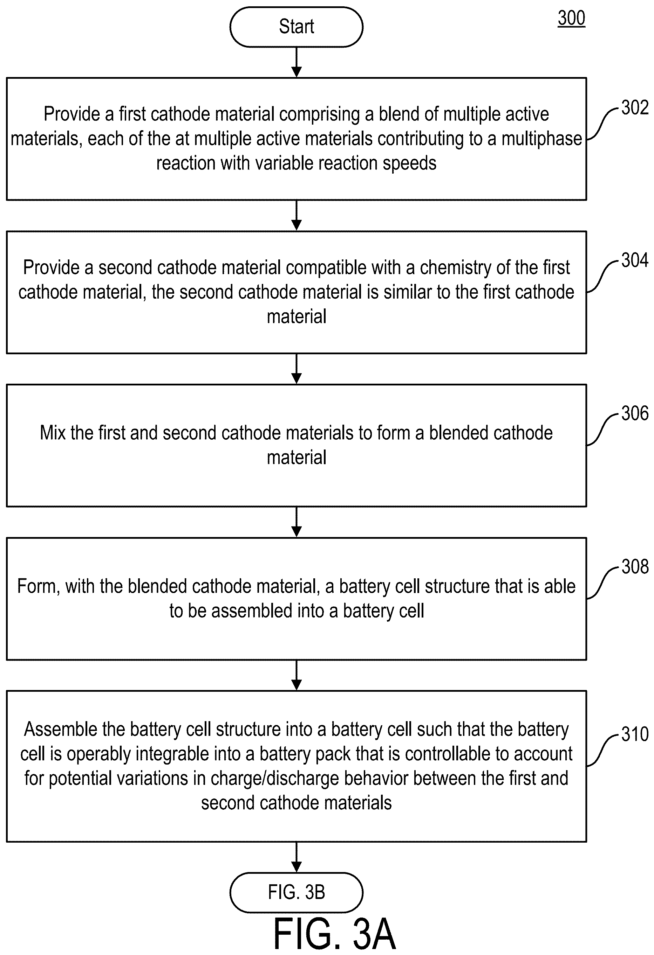

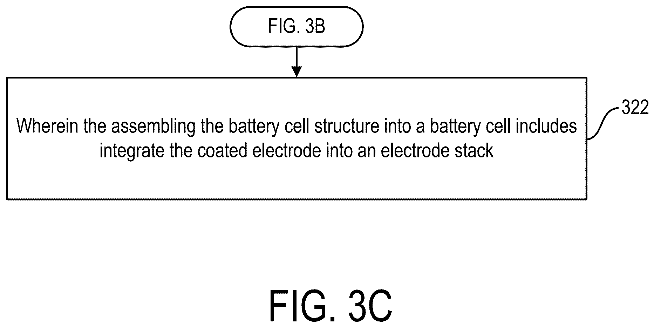

FIG. 3 is a flowchart of an example process 300. FIG. 3 includes a first section of the flowchart shown in FIG. 3A and the second section of the flowchart shown in FIG. 3B. In some implementations, one or more process blocks of FIG. 3 may be performed by a battery cell.

As shown in FIG. 3, process 300 may include providing a first cathode material having a blend of multiple active materials, each of the at multiple active materials contributing to a multiphase reaction with variable reaction speeds (block 302). For example, battery cell may provide a first cathode material having a blend of multiple active materials, each of the at multiple active materials contributing to a multiphase reaction with variable reaction speeds, as described above. As also shown in FIG. 3, process 300 may include providing a second cathode material compatible with a chemistry of the first cathode material, the second cathode material is similar to the first cathode material (block 304). For example, battery cell may provide a second cathode material compatible with a chemistry of the first cathode material, the second cathode material is similar to the first cathode material, as described above. As further shown in FIG. 3, process 300 may include mixing the first and second cathode materials to form a blended cathode material (block 306). For example, battery cell may mix the first and second cathode materials to form a blended cathode material, as described above. As also shown in FIG. 3, process 300 may include forming, with the blended cathode material, a battery cell structure that is able to be assembled into a battery cell (block 308). For example, battery cell may form, with the blended cathode material, a battery cell structure that is able to be assembled into a battery cell, as described above. As further shown in FIG. 3, process 300 may include assembling the battery cell structure into a battery cell such that the battery cell is operably integrable into a battery pack that is controllable to account for potential variations in charge/discharge behavior between the first and second cathode materials (block 310). For example, battery cell may assemble the battery cell structure into a battery cell such that the battery cell is operably integrable into a battery pack that is controllable to account for potential variations in charge/discharge behavior between the first and second cathode materials, as described above.

Process 300 may include additional implementations, such as any single implementation or any combination of implementations described below and/or in connection with one or more other processes described elsewhere herein. In a first implementation, the first and second cathode materials are varied mixtures of lithium manganese iron phosphate (LMFP) materials.

In a second implementation, alone or in combination with the first implementation, the first and second cathode materials are blended iron and manganese, where the first cathode material has a higher content of iron than the second cathode material.

In a third implementation, alone or in combination with the first and second implementation, the multiphase reaction involves a first phase with a fast reaction rate or diffusability and a second phase with a slower, sustained reaction rate or diffusability.

In a fourth implementation, alone or in combination with one or more of the first through third implementations, the battery cell structure is an electrode, such that the step of forming, with the blended cathode material, the battery cell structure that is able to be assembled into a battery cell includes integrating the blended cathode material into an electrode.

In a fifth implementation, alone or in combination with one or more of the first through fourth implementations, the integrating the blended cathode material into an electrode includes coating the electrode with the blended cathode material to form a coated electrode.

In a sixth implementation, alone or in combination with one or more of the first through fifth implementations, the assembling the battery cell structure into a battery cell includes integrating the coated electrode into an electrode stack.

Although FIG. 3 shows example blocks of process 300, in some implementations, process 300 may include additional blocks, fewer blocks, different blocks, or differently arranged blocks than those depicted in FIG. 3. Additionally, or alternatively, two or more of the blocks of process 300 may be performed in parallel.

In practice, this disclosure is applicable to EV manufacturers seeking cost-effective, safe, and sustainable battery solutions. The LMFP battery system supports increased adoption of EVs by addressing current limitations of LIB technologies. Thus, the present disclosure provides an advanced LMFP battery system that balances energy density, safety, and cost for EV applications. By overcoming existing challenges, it paves the way for broader adoption and enhanced performance in sustainable transportation. The following are several practical examples drawing upon some of the many principles discussed in this disclosure.

### Electrified Vehicle Overview

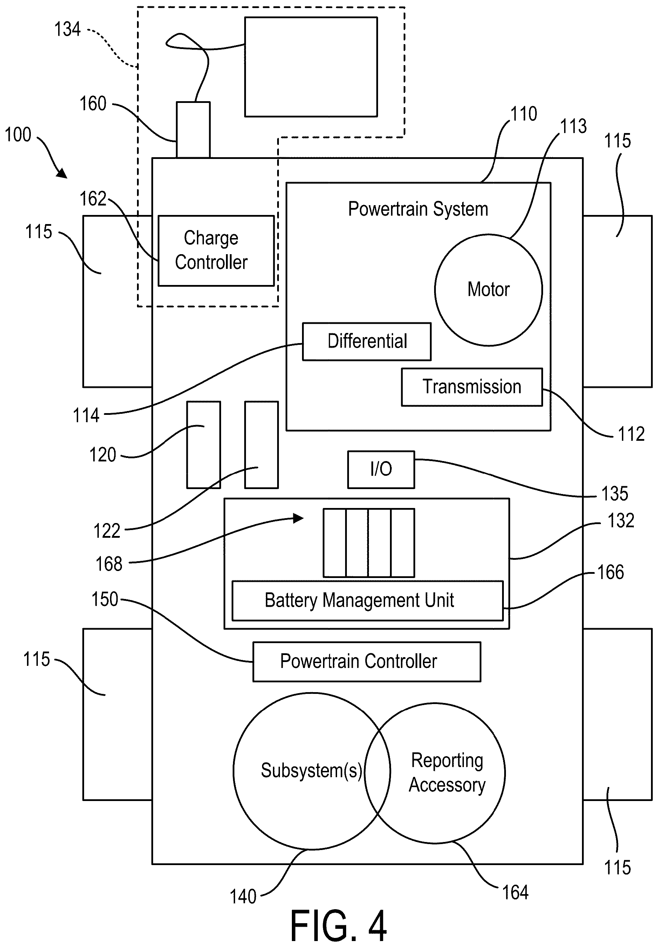

Referring initially to FIG. 4, a schematic diagram of a battery electric vehicle 100 is provided. While the vehicle is referred to as a battery electric vehicle, it is understood that the vehicle may alternatively be a hybrid vehicle, such as a plug-in hybrid vehicle, powered or otherwise operable via a battery and, optionally, one or more of a generator (e.g., power generator, generator plant, electric power strip, on-board rechargeable electricity storage system, etc.) and a motor (e.g., electric motor, traction motor, etc.). Battery electric vehicle 100 may be operable in at least one of a reverse direction (e.g., backward relative to the front end of the vehicle) and a non-reverse direction (e.g., forward or angular direction relative to the front end). Battery electric vehicle 100 may be an on-road or off-road vehicle, including but not limited to cars, trucks, ships, boats, vans, airplanes, spacecraft, or any other type of vehicle.

Battery electric vehicle 100 comprises a powertrain controller 150 communicably and operatively coupled to a powertrain system 110, a brake mechanism 120, an accelerator pedal 122, one or more sensors (not shown), an operator input/output (I/O) device 135, and one or more additional vehicle subsystems 140. Battery electric vehicle 100 may include additional, fewer, or different system components than those depicted in FIG. 4, such that the principles, methods, and apparatuses of the present disclosure are applicable to any suitable vehicle configuration. It should also be understood that the disclosed principles are not limited to on-highway vehicles; rather, they may be applied to other applications including, but not limited to, off-highway construction equipment, mining equipment, marine equipment, and locomotive equipment.

Powertrain system 110 facilitates power transfer from a battery 132 and/or a motor 113 to propel vehicle 100. In one embodiment, powertrain system 110 includes motor 113 operably coupled to battery 132 and charge system 134, where motor 113 transfers power to a final drive (e.g., wheels 115) to propel the vehicle. As shown, powertrain system 110 may further include a transmission 112 and/or differential 114, where differential 114 transfers power output from transmission 112 to final drive 115. Powertrain controller 150 supplies electrical power to motor 113 in response to inputs from accelerator 122, sensors, subsystems 140, and charge system 134 (e.g., a battery charging system or rechargeable battery). In some embodiments, electricity supplied to power motor 113 may alternatively or additionally be provided by an on-board gasoline-engine generator or a hydrogen fuel cell.

In certain embodiments, vehicle 100 includes transmission 112, which may be configured as any transmission type compatible with an electrified powertrain, including a continuously variable transmission, manual transmission, automatic transmission, automated-manual transmission, or dual-clutch transmission. Transmission 112 may provide multiple gear ratios or continuously variable settings that determine output speed based on engine or motor speed. Motor 113, differential 114, and final drive 115 may likewise take any configuration suitable for the vehicle type. In some examples, transmission 112 is omitted and motor 113 is directly coupled to differential 114; in others, motor 113 directly couples to final drive 115 in a direct-drive configuration. Vehicle 100 may also include multiple instances of motor 113-for example, one per driven wheel, one per driven axle, or other suitable arrangements.

Brake mechanism 120 may be implemented as any system or device configured to prevent or reduce motion by slowing or stopping a component of vehicle 100 (e.g., a wheel, axle, crankshaft, or driveshaft). Brake mechanism 120 is generally configured to receive an indication of a desired change in vehicle speed. In some embodiments, brake mechanism 120 comprises a brake pedal operable between a released state and an applied state by an operator of vehicle 100. The brake pedal may operate as a pressure-based system responsive to applied pressure or as a travel-based system responsive to a pedal travel distance, where the force applied to brake mechanism 120 is proportional to that pressure or distance. In certain embodiments, all or a portion of brake mechanism 120 is incorporated into motor 113 as a regenerative braking mechanism.

The released state of brake mechanism 120 corresponds to a brake pedal in a default position where braking is not applied-for example, when the operator's foot is not on the pedal or resting lightly below a minimum actuation force. In some embodiments, the brake pedal is combined with accelerator pedal 122 in a one-pedal driving configuration. The applied state corresponds to the pedal being pressed with a force or travel distance that meets or exceeds a minimum threshold to achieve braking. These thresholds prevent unintended actuation and may vary depending on implementation, such as higher force for a foot-actuated brake pedal and lower force for a hand-actuated lever.

A reduction in actuation force or travel distance may correspond to a desired increase in vehicle speed, while an increase corresponds to a reduction in vehicle speed.

Accelerator pedal 122 may be any torque- or speed-request device, such as a floor-based pedal, lever, or joystick. Sensors associated with accelerator 122 and/or brake mechanism 120 may include a vehicle-speed sensor, accelerator-position sensor (e.g., potentiometer), brake-position or pressure sensor, coolant-temperature sensor, pressure sensor, ambient-air-temperature sensor, or other suitable sensors.

Vehicle 100 may include an operator I/O device 135 that enables communication between the operator and powertrain controller 150. For example, device 135 may include an interactive display (e.g., touchscreen) with buttons, haptic feedback, and controls for acceleration, braking, shifting, cruise control, or navigation. Via device 135, powertrain controller 150 may transmit instructions, commands, or status information to the operator.

Vehicle 100 further includes one or more vehicle subsystems 140, which may include sensors (e.g., speed, pressure, or temperature sensors) and additional systems such as torque sensors for motor 113, transmission 112, differential 114, and/or final drive 115. Other subsystems 140 may include a steering subsystem, electrical subsystem, and a thermal management system comprising radiators, pumps, fans, heat exchangers, and controllers. Additional sensors may include cameras, LIDAR, RADAR, temperature sensors, smoke detectors, or virtual sensors.

Powertrain controller 150 is communicably coupled to powertrain system 110, brake mechanism 120, accelerator 122, I/O device 135, and subsystems 140 via wired or wireless connections (e.g., CAN bus, fiber optics, Wi-Fi, Bluetooth, or cellular). Controller 150 receives and processes data and may interface with an additional or alternative controller as needed.

In embodiments including charge system 134, such as a plug-in charging system, powertrain controller 150 manages charging of battery 132 when a charger 160 is connected to vehicle 100. A charge controller 162 establishes communication between controller 150 and charger 160, receiving charge commands, monitoring sensor signals, and performing safety and performance checks. Charge controller 162 may detect faults such as connection failures or unsafe boundaries and functions as a communication interface between charger 160 and controller 150.

Powertrain controller 150 may also communicate with charger 160, battery 132, and a reporting accessory 164 (e.g., subsystem 140 or another component) via a CAN bus or other communication scheme. Reporting accessory 164 may communicate identification information, current demand, voltage draw, and other operational parameters. Dynamic loads (e.g., an air-conditioning system) can report variable current demand to optimize charge commands and avoid under-delivery of current that extends charging time.

Battery 132 includes one or more battery packs, each having a battery management system 166 and one or more battery modules 168. Sensors monitor temperature, voltage, and current to allow system 166 to manage charging, detect faults, and report conditions such as power limits and temperatures to controller 150. The current sensor may reside within or outside battery 132 and may include multiple sensors whose readings are summed to yield total current.

Powertrain controller 150 may include charge logic operable to determine a command for charger 162 to supply target current to battery 132. This logic may reside within controller 150, within battery-management controller 166, or in a standalone controller. The term "logic," as used herein, encompasses hardware, firmware, or software executing on one or more processors or integrated circuits. A non-transitory machine-readable medium may store such logic and instructions.

A transport-control system and charging-management system may coordinate multiple chargers in a depot or fleet environment, managing vehicle arrival times, charging schedules, and grid load distribution to optimize cost and availability.

Although FIG. 4 is described in connection with a battery electric vehicle, the disclosed architecture may also apply to plug-in hybrid vehicles or other electrified powertrains incorporating an internal-combustion engine, transmission, and differential in combination with battery propulsion.

For purposes of this disclosure, the term "electrified vehicle" is used in an inclusive sense to refer to any vehicle employing an electrical energy storage and propulsion system, whether in full or partial form. Thus, although battery electric vehicle 100 is described in connection with the embodiment of FIG. 4, it should be understood that the same general systems and control principles are equally applicable to hybrid electric vehicles, plug-in hybrid electric vehicles, fuel-cell vehicles, or other architectures that integrate electrical propulsion or energy storage with mechanical power sources. The term also encompasses configurations in which electrical components are used for auxiliary or regenerative functions in vehicles that are otherwise mechanically driven. Accordingly, references to a "battery electric vehicle" in the following description should not be construed as limiting; rather, they are exemplary of a class of electrified vehicles to which the disclosed control systems, charging architectures, and subsystem integrations may be applied. One skilled in the art will appreciate that comparable functionality may be achieved in non-electrified or partially electrified systems where similar subsystems-such as powertrain controllers, charge controllers, or reporting accessories-are present.

In Example 1, a method of making a mixed chemistry battery comprising: providing a first cathode material comprising a blend of multiple active materials, each of the at multiple active materials contributing to a multiphase reaction with variable reaction speeds; providing a second cathode material compatible with a chemistry of the first cathode material, the second cathode material is similar to the first cathode material; mixing the first and second cathode materials to form a blended cathode material; forming, with the blended cathode material, a battery cell structure that is able to be assembled into a battery cell; assembling the battery cell structure into a battery cell such that the battery cell is operably integrable into a battery pack that is controllable to account for potential variations in charge/discharge behavior between the first and second cathode materials.

In Example 2, the method as Example 1 describes, wherein the first and second cathode materials are varied mixtures of lithium manganese iron phosphate (LMFP) materials.

In Example 3, the method as either of Examples 1 or 2 describe, wherein the first and second cathode materials are blended iron and manganese, wherein the first cathode material has a higher content of iron than the second cathode material.

In Example 4, the method as any of Examples 1-3 describe, wherein the multiphase reaction involves a first phase with a rapid voltage profile and a second phase with a slower, sustained voltage profile.

In Example 5, the method as any of Examples 1-4 describe, wherein the battery cell structure is an electrode, such that the step of forming, with the blended cathode material, the battery cell structure that is able to be assembled into a battery cell includes integrating the blended cathode material into an electrode.

In Example 6, the method as any of Examples 1-5 describe, wherein the integrating the blended cathode material into an electrode includes coating the electrode with the blended cathode material to form a coated electrode.

In Example 7, the method as any of Examples 1-6 describe, wherein the assembling the battery cell structure into a battery cell includes integrating the coated electrode into an electrode stack.

In Example 8, a battery cell having a mixed chemistry comprising: a first cathode material including a blend of at least two active materials configured for a multiphase reaction with variable discharge speeds; a second cathode material designed to complement a chemistry of the first cathode material, the second cathode material is similar to the first cathode material; and an electrolyte that facilitates ionic conductivity between a cathode and an anode, the cathode includes the first and second cathode materials.

In Example 9, the battery cell as Example 8 describes, wherein the first cathode material is blended lithium manganese iron phosphate (LMFP) materials.

In Example 10, the battery cell as either of Examples 8 or 9 describe, wherein the first and second cathode materials are blended iron and manganese, wherein the first cathode material has a higher content of iron than the second cathode material.

In Example 11, the battery cell as any of Examples 8-10 describe, wherein the first and second cathode materials are blended to form a blended cathode material that is integrable into a battery cell structure of the battery cell.

In Example 12, the battery cell as any of Examples 8-11 describe, wherein the battery cell includes an electrode stack, and the battery cell structure is an electrode that is integrable into the electrode stack of the battery cell.

In Example 13, the battery as any of Examples 8-12 describe, wherein the electrode is a coated electrode that is coated with the blended cathode material.

In Example 14, the battery cell as any of Examples 8-13 describe, further comprising a protective coating on the cathode particles to reduce degradation during variable-speed reactions.

In Example 15, the battery cell as any of Examples 8-14 describe, wherein the battery cell is modularly interconnectible with one of more similar battery cells of a battery pack.

In Example 16, a battery pack having a mixed chemistry comprising: a plurality of battery cells, each including a cathode with a blend of at least two active materials configured for a multiphase reaction with variable discharge speeds, the at least two active materials being similar materials; a battery management system (BMS) configured to monitor and balance the variable-speed reactions across the cells; a thermal management system to regulate temperature during operation; and electrical interconnections configured to support the multiphase reaction dynamics of the cells.

In Example 17, the battery pack as Example 16 describes, wherein the cells include a blend of LMFP materials.

In Example 18, the battery pack as either of Examples 16 or 17 describe, wherein the blend of LMFP materials includes first and second cathode materials of blended iron and manganese.

In Example 19, the battery pack as any of Examples 16-18 describe, wherein the first cathode material has a higher content of iron than the second cathode material.

In Example 20, the battery pack as any of Examples 16-19 describe, wherein the first cathode material has a ratio of iron to manganese of 6:4 or 7:3.

### Practical Examples

The following practical examples illustrate representative implementations of the mixed-chemistry LMFP battery systems, structures, and processing techniques described in this specification. These examples are non-limiting and are intended to demonstrate how the inventive principles-including blended LMFP cathode chemistries, multiphase reaction management, electrode-level integration, and pack-level operational control-may be applied in manufacturing and operation. Each example corresponds to at least one of the conceptual scenarios depicted in **FIGS. 1-3****,** including material-level blending (Scenario A), cell-component-level integration (Scenario B), and cell-level or pack-level assembly (Scenario C). In practice, these examples may be implemented individually or in any suitable combination, depending on performance objectives, cost targets, or safety constraints.

### Example 1 - Material-Level Blended LMFP Cathode (Scenario A)

In this example, two LMFP compositions having different Fe:Mn ratios (e.g., 6:4 and 5:5) are blended at the **material level** before electrode fabrication, as illustrated in **FIG. 2A****.** The first LMFP material includes a higher Fe content, facilitating a smoother initial voltage slope, while the second LMFP material exhibits a more pronounced manganese-driven plateau. The two powders are combined in a predetermined mass ratio (e.g., 1:1 or 2:1) using high-energy ball milling to ensure uniform particle distribution. After blending, the cathode material is processed into a slurry with conductive carbon and binder, coated on an aluminum current collector, dried, and calendared. This blended-material electrode exhibits a moderated two-phase voltage transition compared to single-phase LMFP materials, improving SOC estimations during operation. Electrochemical testing confirms that the blended cathode maintains the inherent safety and cycle life advantages of LMFP while providing improved control characteristics for BMS algorithms.

### Example 2 - Dual-Cathode-Electrode Stack Construction (Scenario B)

This example corresponds to cell-component-level mixing, wherein two distinct cathode electrodes-each fabricated from a different LMFP composition-are incorporated into the same electrode stack, as shown in FIG. 2A. Instead of blending powders before coating, each cathode electrode is coated with its own LMFP chemistry (e.g., Fe:Mn=6:4 and Fe:Mn=5:5), producing two electrodes with complementary voltage profiles. During cell stacking, the electrodes are arranged in an alternating sequence with anode layers and separators. Because each cathode chemistry reacts at a slightly different rate, the resulting stack exhibits a broadened and smoothed voltage range during discharge. This method allows manufacturers to leverage existing electrode-coating lines without modifying material-blending processes. Following assembly, the electrode stack is compressed, inserted into a pouch housing, wetted with electrolyte, and sealed. Formation cycling activates a combined reaction profile across the dual chemistries, yielding enhanced slope-like performance while maintaining thermal stability.

### Example 3 - Cell-Level Mixed LMFP Chemistry Battery Pack (Scenario C)

In this pack-level example, individual pouch cells are fabricated using single-chemistry LMFP materials, such that one subset of cells uses a first Fe:Mn ratio (e.g., 6:4) and another subset uses a second ratio (e.g., 5:5). As depicted in **FIG. 2B****,** both cell types are integrated into the same battery pack, arranged in a configurable series-parallel architecture. A BMS monitors each cell's voltage, temperature, and impedance, identifying characteristic differences between the two chemistries. During operation, pack-level control algorithms dynamically allocate power demands across the cell subgroups to smooth apparent pack-level voltage transitions. For example, cells with faster reaction kinetics may receive higher current loads during transient demands, while cells exhibiting slower but stable multiphase kinetics are utilized during steady-state cruising. This division of labor enhances pack-level SOC estimation accuracy, mitigates voltage plateaus, and improves overall energy-management control without requiring material-level blending or electrode modification.

### Example 4 - Blended-Cathode Electrode for High-Power Heavy-Duty EVs

This example applies the blended LMFP cathode chemistry to a heavy-duty electric truck battery system, leveraging the thermal stability and long cycle life highlighted in the disclosure. A blended LMFP cathode (e.g., 5:5 and 6:4 blended at 3:1) is selected to deliver a smoother voltage curve under high discharge rates, such as sustained grade climbing or regenerative braking. The electrode is fabricated using a high-load-capacity slurry formulation to increase active material density without compromising structural integrity. The resulting battery cell demonstrates improved controllability during rapid SOC swings typical of heavy-duty drive cycles. Pack integration includes a liquid-cooling plate and distributed temperature sensors, allowing the BMS to maintain operational integrity despite multiphase reactions at elevated temperatures. Testing in simulated Class-8 truck cycles confirms reduced thermal deviation and improved predictive SOC modeling, validating the benefit of blended LMFP in high-power applications.

### Example 5 - Adaptive BMS Control for Multiphase LMFP Reactions

This example illustrates an operational method for managing multiphase LMFP reactions during cycling. A battery cell is constructed using either blended LMFP cathode material or dual-chemistry electrode stacks as described above. During discharge, the BMS detects the characteristic voltage inflection associated with LMFP's two-phase transition (refer to FIG. 1, which depicts the stair-step voltage behavior and blended smoothing effect). The BMS employs an adaptive state-estimation algorithm that accounts for variable diffusivity and reaction rates between the constituent LMFP phases. When the voltage-plateau region is entered, the BMS increases sampling frequency, applies a reaction-phase-aware SOC model, and may temporarily adjust current limits to maintain operational integrity. This adaptive control reduces SOC error accumulation and improves long-term SOH determinations. In fleet applications, such improved accuracy reduces pack imbalance, prolongs service intervals, and enhances charging-profile optimization.

### Guidance

The following guidance is provided to support clear understanding, consistent interpretation, and practical implementation of the embodiments described in this disclosure. It establishes the conventions applicable to the LMFP mixed-chemistry battery systems herein, clarifies how figures and material references are to be understood, and outlines the intended breadth and flexibility of the inventive principles. Unless otherwise expressly stated, drawings are schematic and not drawn to scale, electrochemical profiles (including voltage curves) are idealized for clarity, and references to material compositions, ratios, or reaction behaviors are inclusive of known variations and equivalents. The described cathode materials, electrode structures, and cell-to-pack assemblies are illustrative rather than limiting, and the inventive concepts extend to adaptations and combinations apparent to those skilled in the art.

As required, detailed embodiments of the present disclosure are disclosed herein; however, it is to be understood that the disclosed embodiments are merely exemplary of the disclosure that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

The foregoing disclosure provides illustration and description but is not intended to be exhaustive or to limit the implementations to the precise form disclosed. Modifications may be made in light of the above disclosure or may be acquired from practice of the implementations. As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein. As used herein, satisfying a threshold may, depending on the context, refer to a value being greater than the threshold, greater than or equal to the threshold, less than the threshold, less than or equal to the threshold, equal to the threshold, and/or the like, depending on the context. Although particular combinations of features are recited in the claims and/or disclosed in the specification, these combinations are not intended to limit the disclosure of various implementations. In fact, many of these features may be combined in ways not specifically recited in the claims and/or disclosed in the specification.

Although each dependent claim listed below may directly depend on only one claim, the disclosure of various implementations includes each dependent claim in combination with every other claim in the claim set. No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

### Interpretation and Equivalence

The embodiments described herein are illustrative and not limiting. Structural and functional features disclosed in connection with any embodiment may be combined, substituted, or rearranged with features of other embodiments, unless expressly stated otherwise. Figures showing LMFP discharge curves, blended-material behavior, or process sequences (e.g., FIGS. 1-3) are provided for explanatory purposes and are not necessarily representative of precise operating values or scaling relationships. Relative dimensions, proportions, electrode layer counts, and material ratios are schematic unless otherwise indicated and may vary according to manufacturing constraints or target battery performance.

Terminology such as "set," "arrangement," or "assembly" includes one or more components unless the context clearly dictates a singular interpretation. Terms such as "configured to," "arranged to," "adapted to," and "structured to" refer to functional capability and do not require any particular mechanism, manufacturing process, or material formulation. The inventive concepts disclosed herein should therefore be interpreted as describing relationships between structure, electrochemical function, and system-level behavior-not a specific geometric form or restrictive composition. Equivalent substitutions, design alternatives, control strategies, and process variations that achieve substantially similar technical effects are within the scope of the present disclosure.

### Range and Dimensional Interpretation

All ranges and numerical values disclosed herein-including cathode-material ratios, electrode thicknesses, porosity levels, calendaring densities, state-of-charge (SOC) increments, and voltage-transition widths-are to be understood as allowing for reasonable variation, manufacturing tolerances, and equivalents recognized in the art. Unless otherwise specified, the term "about," when associated with a numerical value, denotes a variation within ±10% of the referenced magnitude.

Where ranges are provided (for example, "1:1 to 3:1 blend ratio," "5-20 µm coating thickness," or "less than 5% voltage deviation across phases"), such ranges encompass all subranges and incremental values therein, including all equivalents achieving similar electrochemical performance. Relative comparisons such as "higher Fe content," "broader voltage plateau," or "faster diffusivity phase" are to be interpreted in relation to the referenced embodiment or material.

Drawings, process diagrams, and cross-sections are representative only. Actual layer thicknesses, electrode positions, and pack configurations may vary depending on fabrication tolerances, slurry formulation, coating equipment, stacking alignment, or pack-integration requirements. Features depicted as discrete may be fabricated integrally, and features illustrated as continuous may include joints, transitions, or interfaces not shown for clarity.

### Cross-Applicability and Functional Breadth

While many embodiments emphasize LMFP mixed-chemistry reactions, blended-cathode formulations, or dual-electrode-stack architectures, the inventive principles may be applied across a broad class of lithium-ion systems and architectures. These include cell-to-pack, cell-to-module-to-pack, blade-cell architectures, stationary storage modules, and hybrid EV/HEV energy-storage platforms. The functional concepts-such as smoothing multiphase voltage transitions, improving SOC estimations, integrating mixed-chemistry electrodes, or enabling pack-level balancing algorithms-are transferrable to other chemistries with analogous phase behavior.

The disclosed principles are compatible with applications in electric vehicles, commercial and heavy-duty drive systems, aviation auxiliary units, marine propulsion, and stationary grid storage. Mechanisms that promote operational integrity (e.g., thermal stability, voltage-transition smoothing, reaction-rate harmonization) and structural integrity (e.g., stable electrode interfaces, consistent mechanical stack pressure) are broadly adaptable across differing system architectures.

### Manufacturing Flexibility

The inventive structures and processes are compatible with a wide range of materials, coating methods, stacking approaches, and cell formats. Although LMFP-LMFP blending is primarily discussed, equivalent functional behavior may arise through blending LMFP with other compatible phosphate chemistries, through dual-electrode-stack arrangements, or through pack-level use of mixed-chemistry cells.

Electrode fabrication may employ doctor-blade coating, slot-die coating, gravure, or extrusion techniques. Calendaring density, binder chemistry, conductive-additive loading, and solvent systems may be tailored to the specific LMFP ratio or phase composition. Similarly, cell assembly may involve stacked (prismatic or pouch) or wound (cylindrical) formats.

Thermal-management strategies-including liquid-cooling plates, heat-spreading foams, and phase-change materials-may be selected based on the thermal characteristics of the blended LMFP phases. Automated manufacturing controls such as in-line impedance checks, vision-based electrode inspection, or formation-cycle profiling may be employed to verify inter-phase consistency and multimodal reaction behavior.

### Validation, Inspection, and Serviceability

Cells or packs implementing the disclosed concepts may be validated using electrochemical, mechanical, thermal, or optical techniques, including impedance spectroscopy, X-ray or ultrasound inspection, thermal imaging, or accelerated cycling. Validation may include confirmation of blended-phase reaction behavior, smoother voltage-transition regions, balanced diffusivity response, and consistent SOC estimation under load.

Modular pack architectures allow submodule-level validation and replacement without full-pack disassembly. This modularity supports scalable manufacturing, fleet serviceability, and improved quality control by enabling localized rework of cells or modules containing blended-chemistry electrodes.

Disclosed herein are lithium manganese iron phosphate (LMFP) battery systems, cells, and methods configured to smooth stair-like voltage behavior inherent to LMFP chemistries. The disclosure describes blending LMFP cathode materials having different iron-to-manganese ratios to moderate multiphase redox reactions and produce a more slope-like voltage profile during charge and discharge. The blended cathode materials may be integrated at a material level, electrode level, cell level, or pack level to improve state-of-charge estimation, power control, and battery management system performance while preserving the inherent safety, cost, and cycle-life advantages of LMFP chemistry. The disclosed systems support modular battery architectures and are adaptable to electric vehicles, heavy-duty applications, and stationary energy storage. By reducing steep voltage transitions without introducing higher-risk chemistries, the disclosed approaches enable improved controllability, reliability, and scalability of LMFP-based energy storage systems.

Accordingly, the examples and embodiments described herein are to be understood as illustrating flexible, scalable, and cross-applicable design principles consistent with the inventive concept of smoothing multiphase LMFP voltage transitions through material blending, electrode-level structuring, and pack-level control.

## Claims

1. A method of forming a mixed-chemistry battery cell, the method comprising:
providing a first cathode material comprising a blend of active LMFP phases configured to exhibit a multiphase electrochemical reaction with variable voltage profiles;
providing a second cathode material having a chemistry compatible with the first cathode material and comprising LMFP phases similar to those of the first cathode material;
mixing the first cathode material and the second cathode material to obtain a blended cathode material having a smoothed voltage-transition behaviour relative to either of the first cathode material or the second cathode material alone;
integrating the blended cathode material into a battery-cell structure suitable for assembly into a battery cell; and
assembling the battery-cell structure into the battery cell, the battery cell being configured for operable integration into a battery pack and for controllable charge/discharge behaviour accounting for variations in reaction dynamics of the first cathode material and the second cathode material.

2. The method of claim 1, wherein the first cathode material and the second cathode material comprise LMFP compositions having different iron-to-manganese ratios, the mixing being performed to moderate stair-step voltage behaviour characteristic of single-ratio LMFP.

3. The method of claim 2, wherein the first cathode material comprises a higher iron content than the second cathode material.

4. The method of any of claims 1-3, wherein the blended cathode material exhibits a combined multiphase reaction comprising a first phase having a relatively rapid reaction rate or diffusivity and a second phase having a relatively slower, sustained reaction rate or diffusivity.

5. The method of any of claims 1-4, wherein integrating the blended cathode material into the battery-cell structure comprises forming a cathode electrode comprising the blended cathode material.

6. The method of claim 5, wherein forming the cathode electrode comprises coating a current collector with the blended cathode material to form a coated cathode electrode.

7. The method of claim 6, wherein assembling the battery-cell structure comprises incorporating the coated cathode electrode into an electrode stack including alternating anode and separator layers.

8. The method of any of claims 1-7, wherein the mixing comprises producing a substantially homogeneous particle-level distribution of the first cathode material and the second cathode material.

9. The method of any of claims 1-8, further comprising performing a formation cycle on the battery cell to stabilise a solid-electrolyte interphase and activate the blended multiphase reaction behaviour.

10. The method of any of claims 1-9, wherein the blended cathode material is configured to provide improved state-of-charge estimation relative to a cathode comprising a single LMFP phase.

11. The method of any of claims 1-10, wherein the battery cell formed according to the method is modularly integrable into a battery pack comprising a plurality of battery cells.

12. The method of any of claims 1-11, wherein the blended cathode material is configured to provide thermal robustness suitable for heavy-duty electric-vehicle operation.

13. The method of any of claims 1-12, wherein the mixing of the first cathode material and the second cathode material is performed to achieve a predetermined voltage-curve smoothness associated with a selected pack-level control strategy.

14. A non-transitory computer-readable medium storing instructions which, when executed by a processor of a battery-management system, cause the processor to:
receive operational data from the battery cell formed according to any of claims 1-13, the operational data comprising at least one of voltage, current, temperature, or impedance associated with the blended cathode material;
identify, based on the operational data, characteristics of a smoothed multiphase voltage profile of the blended cathode material;
and regulate at least one charging or discharging parameter of the battery cell or of a battery pack comprising the battery cell in accordance with the identified characteristics.

15. A battery system comprising:
the battery cell formed according to any of claims 1-13; and
optionally, the battery pack comprising the battery cell and/or the battery-management system comprising the computer-readable medium of claim 14, the battery-management system being configured to execute the stored instructions to regulate operation of the battery pack based on characteristics of the blended cathode material of the battery cell.
